Europäisches Patentamt

European Patent Office

Office européen des brevets

(19)

(11) Veröffentlichungsnummer : **0 033 917**
**B1**

(12) **EUROPÄISCHE PATENTSCHRIFT**

(45) Veröffentlichungstag der Patentschrift :
23.05.84

(51) Int. Cl.³ : **A 01 K 61/00**

(21) Anmeldenummer : **81100684.0**

(22) Anmeldetag : **30.01.81**

(54) **Schirmvorrichtung zur Temperierung und Entsorgung von Wasser in einem begrenzten Zuchtraum für Fische und andere Wasserorganismen.**

(30) Priorität : **12.02.80 DE 3005150**

(43) Veröffentlichungstag der Anmeldung :
**19.08.81 Patentblatt 81/33**

(45) Bekanntmachung des Hinweises auf die Patenterteilung : **23.05.84 Patentblatt 84/21**

(84) Benannte Vertragsstaaten :
**AT BE CH DE FR GB IT LI NL SE**

(56) Entgegenhaltungen :
**AT-B- 25 407**
**GB-A- 2 008 912**
**GB-A- 2 026 823**
**US-A- 1 444 367**
**US-A- 3 683 854**
**US-A- 3 698 359**
**US-A- 4 044 720**

(73) Patentinhaber : **Pohlhausen, Henn, Dr.**
**Friedrichstrasse 56**
**D-2110 Buchholz/Nordheide (DE)**

(72) Erfinder : **Pohlhausen, Henn, Dr.**
**Friedrichstrasse 56**
**D-2110 Buchholz/Nordheide (DE)**

(74) Vertreter : **Schupfner, Gerhard et al**
**Patentanwälte Dipl.-Ing. Hans-Jürgen Müller**
**Dipl.-Chem.Dr.phil.nat. Gerhard Schupfner Dipl.-Ing.**
**Hans-Peter Gauger**
**Karlstrasse 5 D-2110 Buchholz in der Nordheide (DE)**

EP 0 033 917 B1

**Beschreibung**

Die Erfindung betrifft eine Vorrichtung zur Temperierung und Entsorgung des Wassers in einem begrenzten Zuchtraum für Fische und andere Wasserorganismen innerhalb eines umgebenden Gewässers, und insbesondere eine Vorrichtung zur Aufrechterhaltung eines künstlichen, wärmeren Epilimnions und/oder eines kälteren Hypolimnions in einem vorgegebenen Bereich eines Gewässers.

Es ist bekannt, Fische in Seen usw. in Netzgehegen aufzuziehen (PROSKE, CHR., 1978, Zur Produktion von Süßwasserfischen in der Bundesrepublik Deutschland, Kali-Briefe (Büntehof) 14 (6), Seite 386), wobei sowohl zu hohe als auch zu niedrige Temperaturen des Außenwassers die Produktion in Gehegen herabsetzen oder sogar ausschließen können (EDWARDS, D. J., 1978, Salmon and Trout Farming in Norway, Norwich, Seite 21 und 79-99). Aus diesem Grunde ist zum Beispiel die Gehegehaltung des wertvollsten Fisches, des atlantischen Lachses (Salmo salar), in Nord- und Westeuropa nur im unmitterbaren Bereich des Golfstromes in geschützten Buchten realisierbar (EDWARDS a. a. O., Seite 2-7). In geschlossenen Seen ist eine bisher übliche Gehegehaltung abzulehnen, da durch die hohe Verschmutzung das biologische Gleichgewicht gestört werden kann (PROSKE a. a. O. Seite 386).

Es ist weiter bekannt, Fische, z. B. Lachse, in Teichen oder Gehegen im Zustrom von großen Mengen von erwärmtem Wasser z. B. aus Kraftwerken zu halten (EDWARDS a. a. O. Seite 25-26). Dieses Durchlaufverfahren ist mit erheblichem Energieverbrauch verbunden und realisierbar nur, wenn billige Abwärme zur Verfügung steht, wobei die Reinhaltung des das Gehege umgebenden Wassers Entsorgungsprobleme aufwirft (PROSKE a. a. O. Seite 387).

Warmwasseranlagen mit Umlaufverfahren werden zur Zeit erprobt, doch ist eine praktikable und wirtschaftliche Lösung des Problemes der Unschädlichmachung der Schadstoffe in geschlossenen Anlagen für Fische überhaupt und für Salmoniden insbesondere noch nicht gefunden (PROSKE a. a. O Seite 387), nicht zuletzt weil die Entsorgung des umlaufenden Wassers von im Wasser gelösten schwer abbaubaren Ausscheidungsstoffen der Fische technisch große Schwierigkeiten bereitet (BOHL, M., 1976, Aquakulturexperimente in Wasserkreislauf — Grundlagen und Erfahrungen ; Fortschritte in der Aquakultur und die Belastung der Gewässer durch Intensivzucht und Maßnahmen zu ihrer Bekämpfung ; Arbeiten des Deutschen Fischerei-Verbandes, Heft 19, Seite 142-151).

Weiterhin ist es bekannt, Fische in Plastikbehältern zu züchten, wobei ggf. auch das Wasser durch Einleiten von Dampf erhitzt werden kann (H. POHLHAUSEN, Lachse in Teichen, Seen, Flüssen und Bächen, Paul Parey-Verlag, 1978, Seiten 103, 116).

Aus US-A- 4 044 720 sind Fischgehege in der Form flacher Behälter bekannt, die als schwimmende Fließkanäle ausgebildet sind. Diese Behälter weisen jeweils einen Boden auf, und das Wasser wird aus tieferen Kaltwasserzonen ggf. unter Sauerstoffzugabe durch Pumpen herauf- und durch die Fließkanäle hindurchgefördert. Zusätzlich kann ein schwimmender Behälter mit Trichterboden im Abfluß des zwangsbewegten Wassers des Fischgeheges vorgesehen sein, worin Abfallstoffe absetzen gelassen und über die Trichteröffnung abgezogen werden. Dieser Behälter mit Trichterboden ist dem Gehege nachgeschaltet und dient zur Reinigung des Wassers, jedoch nicht gleichzeitig auch als Gehegeraum. Die Versorgung mit Frisch- bzw. Kaltwasser erfolgt aus den verschiedenen Kaltwasserzonen des betreffenden Gewässers durch Zwangszirkulation.

Der Erfindung liegt die Aufgabe zugrunde, die Temperatur des Wassers im Zuchtraum innerhalb einer Schirmvorrichtung mit geringem Aufwand und geringen Energieverlusten je nach Bedarf auf einem gewünschten Wert wärmer oder kälter zu halten als die Temperatur in dem die Schirmvorrichtung umgebenden Wasser, gleichzeitig den Zuchtraum zu entsorgen sowie bei Eisgang und Sturm die Sicherheit des Betriebes zu gewährleisten.

Diese Aufgabe wird erfindungsgemäß zur Aufrechterhaltung eines künstlichen, wärmeren Epilimnions in einem vorgegebenen Bereich eines kälteren Gewässers (H) dadurch gelöst, daß der Bereich nach allen Seiten durch Wände (A) und, falls der Bereich nach oben nicht durch die Oberfläche des Gewässers begrenzt ist, auch nach oben durch einen Deckel (B) aus einem die Konvektion in das kältere Gewässer unterbindenden, vorzugsweise wärmedämmenden Material begrenzt ist, und daß eine ggf. vorhandene untere Begrenzung des Bereiches den freien Wasseraustausch mit dem umgebenden Gewässer (H) zuläßt.

Die Aufrechterhaltung eines künstlichen kälteren Hypolimnions in einem vorgegebenen Bereich eines wärmeren Gewässers ist erfindungsgemäß dadurch gewährleistet, daß der Bereich nach allen Seiten und nach unten durch Wände (C) und ein Bodenteil (D) aus einem die Konvektion in das wärmere Gewässer (M, W) unterbindenden, vorzugsweise wärmedämmenden Material begrenzt ist, und daß eine ggf. vorhandene obere Begrenzung des Bereiches den freien Wasseraustausch mit dem umgebenden Gewässer (M, W) zuläßt.

Bei einer zur Temperierung und Entsorgung des Wassers ausgebildeten erfindungsgemäßen Vorrichtung ist unterhalb einer erfindungsgemäßen Vorrichtung zur Aufrechterhaltung eines künstlichen Epilimnions wie oben erläutert eine erfindungsgemäße Vorrichtung zur Aufrechterhaltung eines künstlichen Hypolimnions wie oben erläutert mit einem Bodenteil (D) angeordnet, der als nach unten konisch zulaufender Sammeltrichter ausgebildet ist, welcher an seiner tiefsten Stelle mit einem Auslaß (L) für die Kot- und Futterreste versehen ist. Bei vertikalen Abstand ist ggf. ein zwischen dem unteren Rand der Vorrichtung zur Aufrechterhaltung eines künstlichen Epilimnions und dem oberen Rand der Vorrichtung zur Aufrechterhaltung eines künstlichen Hypolimnions ein Verbindungsnetz (E) angeordnet, das das seitliche Entweichen des Zuchtmaterials in das umgebende Gewässer verhindert.

Bei dieser erfindungsgemäßen Vorrichtung ist so mit der obere Teil als Warmwasserschirm ausgebildet der das seitliche Abfließen des in der Regel spezifisch leichteren wärmeren Wassers verhindert. Eine Abdeckung des Warmwasserschirms verhindert das Abfließen des Wassers nach oben und vermindest außerdem eine Abkühlung des wärmeren Wassers durch Wärmeausstrahlung und Wärmeleitung. Der Mittelteil ist als Kaltwasserschirm ausgebildet, der das seitliche Abfließen des spezifisch schwereren kühleren Wassers verhindert. Ferner verhindert der als Sammeltrichter ausgebildete, nach unten konisch zulaufende, an seiner tiefsten Stelle mit einem Auslaß versehene Bodenteil das Herabsinken des in der Regel spezifisch schwereren kühleren Wassers und sammelt gleichzeitig die noch schwereren Kot- und Futterreste auf. Ein ggf. vorhandenes Verbindungsnetz, hindert die in der Vorrichtung gehaltenen Wasserorganismen am Entweichen, läßtaber gleichzeitig einen Austausch von im Wasser gelösten Stoffen zwischen dem Wasser innerhalb der Vorrichtung und dem Außenwaser.

Hierbei wird Wasser mit kontrollierter Temperatur in für rentable Aufzucht optimaler Dosierung zur Erzielung gewünschter Temperaturbedingungen im Gehege in die Vorrichtung geleitet und unter Ausnutzung der Unterschiede des spezifischen Gewichtes des Wassers bei unterschiedlichen Temperaturen in dem für das Wasser teilweise geschlossenen Schirm gehalten, und zwar wärmeres Wasser in einem nach unten, kälteres Wasser in einem nach oben offenen, von einem wasserundurchlässigen Schirm teilweise abgegrenzten Raum.

Innerhalb der Schirmvorrichtung ermöglicht das wärmere Wasser im Winter einen besseren Zuwachs von Fischen und anderen Wasserorganismen, das kühlere Wasser im Sommer ebenfalls, außerdem können Fischverluste durch zu hohe Sommertemperaturen vermieden werden. Die Einhaltung optimaler Temperaturen ermöglicht optimale Produktion von in der Schirmvorrichtung aufgezogenen Fischen und anderen Orgnismen.

Zur Reinhaltung des Geheges bzw. der Schirmvorrichtung sowie des Gewässers, in dem diese untergebracht sind, werden Kot- und Futterreste aus dem unteren trichterförmigen Teil der Schirmvorrichtung abgesogen.

Das Aufsammeln von Kot- und Futterresten erleichtert die Entsorgung. Weiterhin kann die Entsorgung von im Wasser gelösten Schadstoffen, z. B. Urin, auf dem Wege der Diffusion durch Abgabe an das Außenwasser erfolgen. Die Versorgung der Fische und anderer Organismen in der Schirmvorrichtung kann mit im Wasser gelöstem Sauerstoff ebenfalls auf dem Wege der Diffusion erfolgen.

Im Außenwasser vorhandene Futterfische und Nährorganismen können in die Schirmvorrichtung schwimmen, erfahrungsgemäß werden sie vom Kot, von Futterresten und der günstigen Wassertemperatur innerhalb der Schirmvorrichtung angelockt und dienen den in der Schirmvorrichtung zurückgehaltenen größeren Fischen als nützliche zusätzliche Naturnahrung.

Bei Vereisung, Eisgang und Sturm kann die Vorrichtung in sichere Wassertiefen gesenkt werden, um einer Zerstörung der Vorrichtung vorzubeugen.

Die mit der Erfindung erzielten Vorteile bestehen insbesondere darin,

(1) daß die Einhaltung einer konstanten und günstigen Temperatur innerhalb der Schirmvorrichtung eine von der Außentemperatur unabhängige Gehegeaufzucht mit gegenüber bisherigen Verfahren erheblich größerer und sicherer Jahresproduktion zuläßt,

(2) daß eine Gehegeaufzucht in Gewässern möglich wird, die wegen ihrer Temperaturverhältnisse bisher nicht für bestimmte Fischarten in Frage kamen,

(3) daß auch in solchen Gewässern, deren Wasserqualität bisher eine Gehegeaufzucht ausschloß, nunmehr die Gehegeaufzucht möglich wird,

(4) daß die leichte und sichere Entsorgung des Geheges die Gehegeaufzucht dort unbedenklich macht, wo sie bisher wegen zu großer Umweltbelastung nicht zugelassen werden konnte,

(5) daß die Warmwasseraufzucht, die bisher nur mit großem Aufwand an Energie oder beim Vorliegen großer Mengen von Abwärme möglich war, nunmehr auch unter normalen Voraussetzungen rentabel sein kann,

(6) daß sie über die Gehegehaltung hinaus bei geeignetem Betrieb auch Wildfischen und in Teichen gehaltenen Fischen in Notzeiten Schutz vor zu hohen und zu niedrigeren Temperaturen bietet, wodurch Fischsterben vorgebeugt und eine insgesamt höhere Produktion ermöglicht wird,

(7) daß sie eine zusätzliche Mast von Forellen in einem konventionellen Karpfenteich neben der Karpfenaufzucht zuläßt und dadurch die Produktion des Betriebes erheblich steigert, und

(8) daß sie den Schutz der in Gehegen gehaltenen Fische vor Eisgang und Sturm gestattet, wenn die Schirmvorrichtung im Bedarfsfall in geeigneter Tiefe unter der Wasseroberfläche verankert wird, wodurch die Risiken im Vergleich zur konventionellen Gehegeaufzucht erheblich verringert werden.

Die Wände der Schirmvorrichtung sollen aus möglichst wasserundurchlässigem sowie möglichst wärmeisolierendem Material, z. B. Platten, Folien oder Geweben bestehen, die insbesondere permeabel den Austausch von Sauerstoff und/oder den Austausch von im Wasser gelösten Stoffen gestatten.

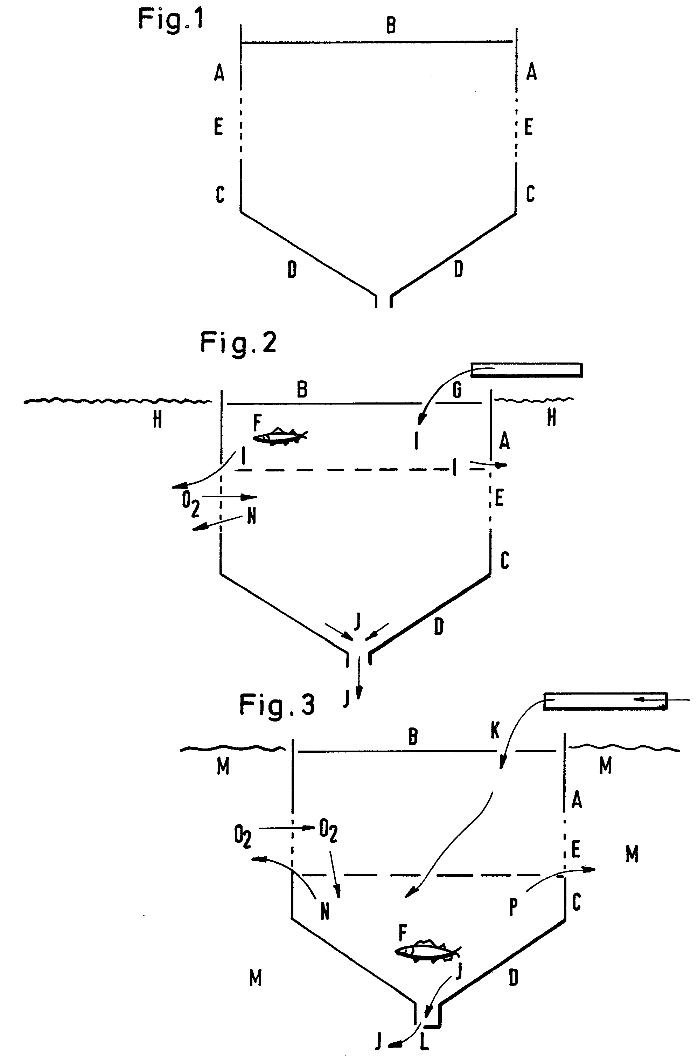

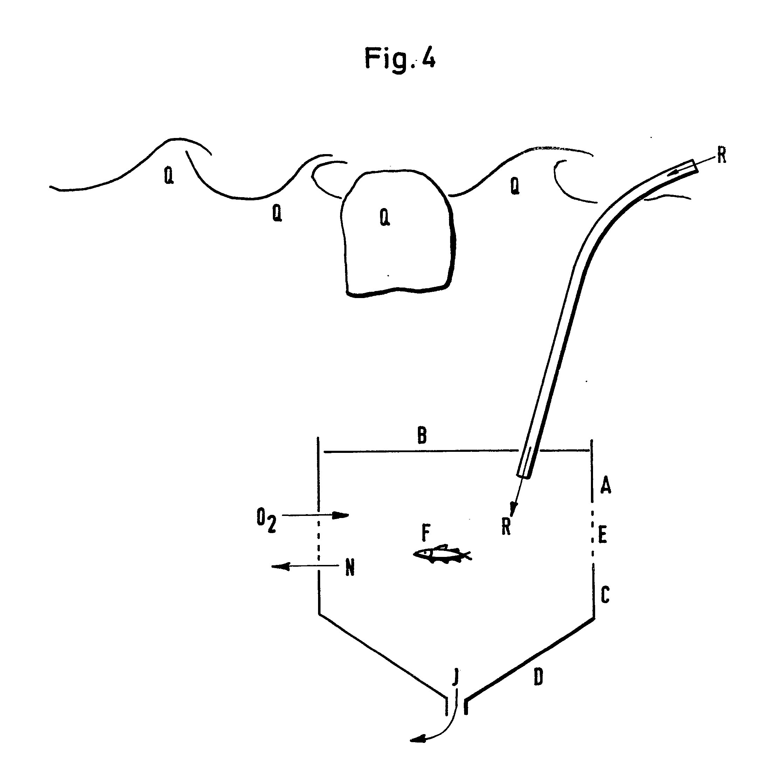

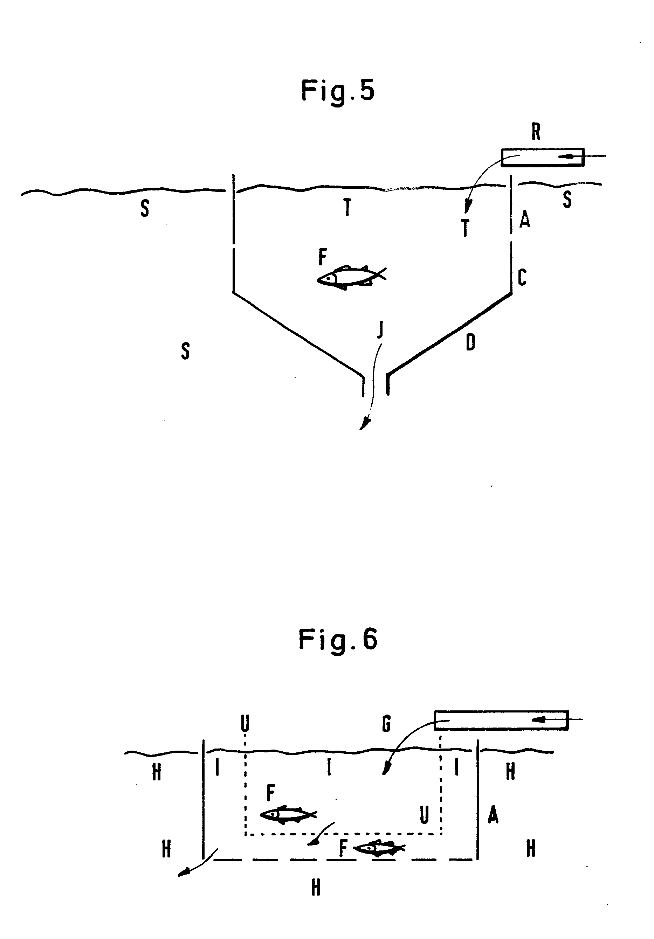

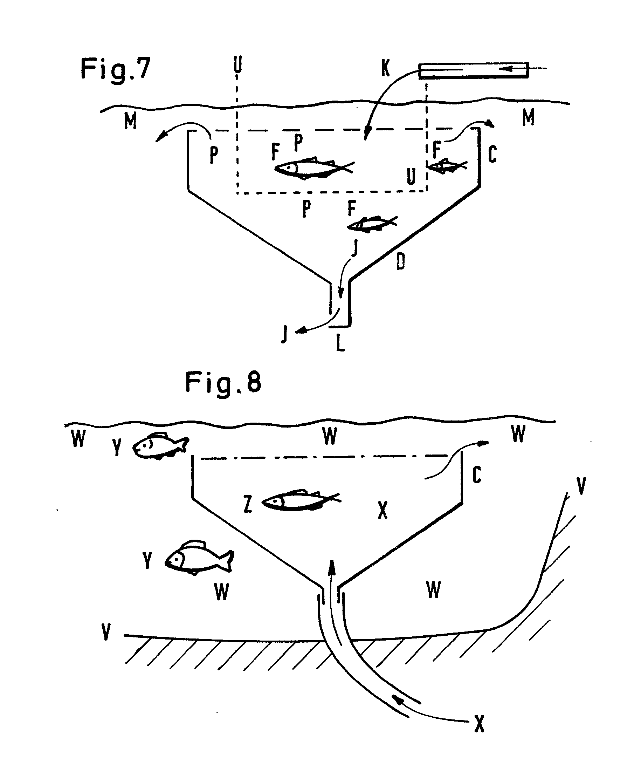

Die folgenden Beispiele und die Figuren 1-8 dienen der Erläuterung der Erfindung.

**0 033 917**

Anwendungsbeispiele und Zeichenerklärungen zu den Figuren

Figur 1

Wesentliche Teile der Schirmvorrichtung nach Anspruch 1 :

A Warmwasserschirm
B Abdeckung des Warmwasserschirmes
C Kaltwasserschirm
D Sammeltrichter
E Verbindungsnetz

Figur 2

Anwendungsbeispiel zur Fischproduktion bei niedrigen Aussentemperaturen mit der Schirmvorrichtung nach Anspruch 1.
Zeichenerklärung :

A-E wie Figur 1
F Fisch in der Schirmvorrichtung
G Zufließendes wärmeres Wasser
H Kühleres Außenwasser, z. B. 4 °C
I Wärmeres, leichteres Wasser, z. B. 15 °C
J Mit Kot und Futterresten belastetes Wasser
N Im Wasser gelöste Schadstoffe
$O_2$ Im Wasser gelöste Sauerstoff

Das wärmere Wasser I wird im Warmwasserschirm A gesammelt und zurückgehalten. Kot und Futterreste J der Fische F werden im Sammeltrichter D gesammelt und hinausgeleitet. Der Austausch der Schadstoffe N und des Sauerstoffes $O_2$ erfolgt durch die Maschen des Verbindungsnetzes E. Auch bei niedrigen Außentemperaturen können die Fische bei Optimaltemperatur im sauberen, sauerstoffreichen Wasser gehalten werden.

Figur 3

Anwendungsbeispiel zur Fischaufzucht bei hohen Außentemperaturen mit der Schirmvorrichtung nach Anspruch 1. Zeichenerklärung :

A-F wie Figur 1 und 2
K Kälteres Wasser, Zuflußmenge größer als Abflußmenge durch L
L Sperrvorrichtung zur Regulierung der Abflußmenge
J wie Figur 2
M Wärmeres, leichteres Außenwasser, z. B. 30 °C
N-$O_2$ wie Figur 2
P Kühleres, spezifisch schwereres Wasser, z. B. 15 °C

Das kühlere, spezifisch schwerere Wasser P wird im Kaltwasserschirm C und Sammeltrichter D gesammelt und zurückgehalten. Kot und Futterreste J werden im Sammeltrichter D gesammelt und durch die Sperrvorrichtung L hinausgeleitet. Der Austausch von Schadstoffen N und vom Sauerstoff $O_2$ erfolgt durch die Maschen des Verbindungsnetzes E. Auch bei zu hohen Außentemperaturen können die Fische F bei Optimaltemperatur im sauberen, sauerstoffreichen Wasser gehalten werden.

Figur 4

Anwendungsbeispiel für Fischaufzucht in eisfreier und sturmgeschützter Tiefe im Winter, beim Sturm oder beim Eisgang (Hilfsvorrichtung gemäß Anspruch 8 nicht gezeigt).
Zeichenerklärung :

A-$O_2$ wie Figur 1 und 2
Q Wasseroberfläche mit Wellengang und Eis
R Frischwasser mit Futter

Die Schirmvorrichtung nach Anspruch 1 wird in ungefährdeter Tiefe verankert und wie auf Figur 2 dargestellt betrieben. Das Futter für die Fische F wird mit dem zugeführten Frischwasser R in die Vorrichtung geleitet.

4

# 0 033 917

## Figur 5

Anwendungsbeispiel zur Fischaufzucht in für Fische schädlichen Gewässern nach Anspruch 2, 3, und 4.

Zeichenerklärung :

A-R wie Figur 1, 2 und 4
S    für Fische schädliches Wasser
T    für Fische taugliches Wasser

Das für Fische taugliche Wasser T wird innerhalb der Schirmvorrichtung gesammelt und zurückgehalten. In dem vom tauglichen Wasser durchströmten Raum sind die Fische vor dem schädlichen Wasser S des umgebenden Gewässers geschützt.

## Figur 6

Anwendungsbeispiel zum Warmhalten eines konventionellen Fischgeheges, Teilausführung nach Anspruch 2, Warmwasserschirm.
Zeichenerklärung :

A-I wie Figur 1 und 2
U    Konventionelles Fischgehege bzw. Netzgehege

Das ein konventionelles Netzgehege umgebende und das im Fischgehege U befindliche Wasser I wird bei zu niedrigen Außentemperaturen so warm gehalten wie es für die Fische am bekömmlichsten ist. Auch freie Fische können das wärmere Wasser innerhalb des nach unten offenen Warmwasserschirmes A aufsuchen und sich innerhalb des Schirmes A, aber außerhalb des Netzgeheges U im optimalen Wärmebereich aufhalten, wodurch eine bessere Abwachsleistung und eine geringere Krankheitsanfälligkeit erreicht wird. Das wärmere Wasser I bildet gleichzeitig ein künstliches Epilimnion von begrenztem Umfang.

## Figur 7

Anwendungsbeispiel zur sommerlichen Kühlhaltung eines konventionellen Netzgeheges und zum Wärmeschutz für freie Fische durch Herstellung eines räumlich begrenzten sauerstofffreien Hypolimnions.
Zeichenerklärung :

A-U wie Figur 1-3 und 6

Das kühlere und schwere Wasser P wird im Kaltwasserschirm C und im Sammeltrichter D gesammelt und zurückgehalten.
Das ein konventionelles Fischgehege U umgebende und das im Fischgehege befindliche Wasser wird bei zu hohen Außentemperaturen so kühl gehalten, wie es für Fische am bekömmlichsten ist. Auch freie Fische können das kühlere Wasser innerhalb des nach oben offenen Kaltwasserschirmes D aufsuchen. Das kältere Wasser P bildet gleichzeitig ein künstliches sauerstoffreiches Hypolimnion von begrenztem Umfang.

## Figur 8

Anwendungsbeispiel zum Auffangen des Grundwassers oder einer Quelle oder eines Baches, um in einem warmen oder eutrophen Gewässer ein Refugium für Kalt- und Klarwasserfische zu schaffen.
Zeichenerklärung :

A-D wie Figur 1
V    Teichboden
W    warmes, eutrophes Teichwasser
X    kühleres Quell- oder Grundwasser
Y    wärmeliebender Fisch, z. B. Karpfen
Z    Kaltwasserfisch, z. B. Forelle

Kühleres Quellwasser wird im Kaltwasserschirm C und dem Sammeltrichter D gesammelt und festgehalten ; diese sind in einem warmen Karpfenteich untergebracht. Dabei ist der Karpfenteich für die Karpfenaufzucht, der Kaltwasserschirm für die Forellenmast anwendbar, wodurch Raum- und Kostenersparnis erzielt werden kann.

5

# 0 033 917

Ansprüche

1. Vorrichtung zur Aufrechterhaltung eines künstlichen, wärmeren Epilimnions in einem vorgegebenen Bereich eines kälteren Gewässers (H), dadurch gekennzeichnet, daß der Bereich nach allen Seiten durch Wände (A) und, falls der Bereich nach oben nicht durch die Oberfläche des Gewässers begrenzt ist, auch nach oben durch einen Deckel (B) aus einem die Konvektion in das kältere Gewässer unterbindenden, vorzugsweise wärmedämmenden Material begrenzt ist, und daß eine ggf. vorhandene untere Begrenzung des Bereichs den freien Wasseraustausch mit dem umgebenden Gewässer (H) zuläßt.

2. Vorrichtung zur Aufrechterhaltung eines künstlichen, kälteren Hypolimnions in einem vorgebenen Bereich eines wärmeren Gewässers (M, W), dadurch gekennzeichnet, daß der Bereich nach allen Seiten und nach unten durch Wände (C) und ein Bodenteil (D) aus einem die Konvektion in das wärmere Gewässer (M, W) unterbindenden, vorzugsweise wärmedämmenden Material begrenzt ist, und daß eine ggf. vorhandene obere Begrenzung des Bereichs den freien Wasseraustausch mit dem umgebenden Gewässer (M, W) zuläßt.

3. Vorrichtung zur Aufrechterhaltung eines Hypolimnions nach Anspruch 2, dadurch gekennzeichnet, daß das Bodenteil (D) als nach unten konisch zulaufender Sammeltrichter ausgebildet ist, der an seiner tiefsten Stelle mit einem Auslaß (L) für die Kot- und Futterreste versehen ist.

4. Vorrichtung zur Temperierung und Entsorgung des Wassers in einem begrenzten Zuchtraum für Fische und andere Wasserorganismen innerhalb eines umgebenden Gewässers, dadurch gekennzeichnet, daß unterhalb einer Vorrichtung zur Aufrechterhaltung eines künstlichen Epilimnions nach Anspruch 1 eine Vorrichtung zur Aufrechterhaltung eines künstlichen Hypolimnions nach Anspruch 2 mit einem Bodenteil in der Ausbildung nach Anspruch 3 angeordnet ist, und daß bei vorhandenem vertikalem Abstand ggf. ein zwischen dem unteren Rand der Vorrichtung nach Anspruch 1 und dem oberen Rand der Vorrichtung nach Anspruch 2 angeordnetes Verbindungsnetz (E) das seitliche Entweichen des Zuchtmaterials in das umgebende Gewässer verhindert.

5. Vorrichtung nach einem der vorhergehenden Ansprüche, dadurch gekennzeichnet, daß es ein konventionelles Fischgehege umgibt.

6. Vorrichtung nach einem der vorhergehenden Ansprüche, dadurch gekennzeichnet, daß das die Konvektion unterbindende Material aus wasserundurchlässigen Folien besteht.

7. Vorrichtung nach einem der vorhergehenden Ansprüche, dadurch gekennzeichnet, daß das die Konvektion unterbindende Material zumindest teilweise aus permeablem Material gebildet ist, das den Austausch von Sauerstoff und/oder den Austausch von im Wasser gelösten anderen Stoffen gestattet.

8. Vorrichtung nach einem der vorhergehenden Ansprüche, dadurch gekennzeichnet, daß sie mit einer Verankerung versehen ist.

9. Vorrichtung nach einem der vorhergehenden Ansprüche, dadurch gekennzeichnet, daß sie mit einer Hilfsvorrichtung ausgerüstet ist, die unter Gewährleistung der Versorgung der Fische und/oder anderer Wasserorganismen mit Futter und Sauerstoff das Absenken und Heben der Schirmvorrichtung gestattet.

## Claims

1. A device for maintaining an artificial, warmer epilimnion in a predetermined area of a colder body of water (H), characterized in that said area is confined on all sides by walls (A) and — provided the top of said area is not defined by the surface of the body of water — is also confined at the top by a cover (B) of a material which inhibits convection into the colder water and preferably is a thermally insulating material, and that an optionally provided lowermost boundary means for said area permits free water exchange with the surrounding body of water (H).

2. A device for maintaining an artificial, colder hypolimnion in a predetermined area of a warmer body of water (M, W), characterized in that said area is confined on all sides and downwardly by walls (C) and by a bottom member (D) of a material which inhibits convection into the warmer body of water (M, W) and is preferably a thermally insulating material, and that an optionally provided uppermost boundary means for said area permits free water exchange with the surrounding body of water (M, W).

3. A device for maintaining a hypolimnion as claimed in claim 2, characterized in that said bottom member (D) is a downwardly tapering collecting funnel formed at its lowermost point with an outlet (L) for faeces and food scraps.

4. A device for temperature and pollution control of the water within a confined farming space for fish and other aquatic organisms within a surrounding body of water, characterized in that beneath a device for maintaining an artificial epilimnion according to claim 1 there is disposed a device for maintaining an artificial hypolimnion according to claim 2 including a bottom member in accordance with claim 3, and that in case of a vertical spacing a connecting netting (E) optionally provided between the lower edge of the device according to claim 1 and the upper edge of the device according to claim 2 prevents lateral escape of the farming material into the surrounding body of water.

5. A device as claimed in any of the preceding claims, characterized in that it surrounds a conventional fish farming enclosure.

6. A device as claimed in any of the preceding claims, characterized in that the material for inhibiting convection is formed by water-impermeable sheets.

7. A device as claimed in any of the preceding claims, characterized in that the material for inhibiting convection is formed at least in part of permeable material permitting the exchange of oxygen and/or the exchange of other substances dissolved in the water.

8. A device as claimed in any of the preceding claims, characterized in that it is provided with mooring means.

9. A device as claimed in any of the preceding claims, characterized in that it is equipped with an auxiliary device which permits lowering and elevating of the shielding device while ensuring food and oxygen supply to the fish and/or other aquatic organisms.

**Revendications**

1. Dispositif pour maintenir un épilimnion artificiel plus chaud dans une zone prédéterminée d'une eau plus froide (H), caractérisé en ce que la zone est limitée de tous côtés par des parois (A) et, au cas où la zone n'est pas limitée vers le haut par la surface de l'eau, elle est limitée également vers le haut par un couvercle (B) en une matière de préférence calorifuge arrêtant la convection dans l'eau plus froide, et en ce qu'une limitation inférieure éventuellement présente de la zone permet l'échange libre d'eau avec l'eau environnante (H).

2. Dispositif pour maintenir un hypolimnion artificiel plus froid dans une zone prédéterminée d'une eau plus chaude (M, W), caractérisé en ce que la zone est limitée de tous côtés et vers le bas par des parois (C) et une partie de fond (D) en une matière de préférence calorifuge, empêchant la convection dans l'eau plus chaude (M, W), et en ce qu'une limite supérieure éventuellement présente de la zone permet l'échange libre d'eau avec l'eau environnante (M, W).

3. Dispositif pour maintenir un hypolimnion selon la revendication 2, caractérisé en ce que la partie de fond (D) est réalisée comme un entonnoir collecteur se terminant vers le bas coniquement et qui est muni à l'endroit le plus bas d'une sortie (L) pour les restes d'excréments et de nourriture.

4. Dispositif pour tempérer et préserver l'eau dans un espace d'élevage limité pour poissons et autres organismes aquatiques à l'intérieur d'une eau environnante, caractérisé en ce que, en dessous d'un dispositif pour maintenir un épilimnion artificiel selon la revendication 1 est disposé un dispositif pour maintenir un hypolimnion artificiel selon la revendication 2, avec une partie de fond selon la configuration de la revendication 3, et en ce que, lors de l'existence d'une distance verticale, le cas échéant, un réseau de liaison (E) disposé entre le bord inférieur du dispositif selon la revendication 1 et le bord supérieur du dispositif selon la revendication 2 empêche que la matière d'élevage ne s'échappe latéralement dans l'eau environnante.

5. Dispositif selon l'une des revendications précédentes, caractérisé en ce que l'eau environnante entoure un aquarium conventionnel de poissons.

6. Dispositif selon l'une des revendications précédentes, caractérisé en ce que la matière arrêtant la convection est constituée par des feuilles imperméables à l'eau.

7. Dispositif selon l'une des revendications précédentes, caractérisé en ce que la matière arrêtant la convection est formée au moins partiellement par une matière perméable qui permet l'échange d'oxygène et/ou l'échange d'autres matières dissoutes dans l'eau.

8. Dispositif selon l'une des revendications précédentes, caractérisé en ce qu'il est muni d'un ancrage.

9. Dispositif selon l'une des revendications précédentes, caractérisé en ce qu'il est équipé d'un dispositif auxiliaire qui permet la montée et la descente du dispositif de protection en garantissant que les poissons et/ou d'autres organismes aquatiques puissent recevoir de la nourriture et de l'oxygène.

**Fig.1**

**Fig.2**

**Fig.3**

# Fig. 4

# Fig.5

# Fig.6

Fig.7

Fig.8